# EUROPÄISCHE PATENTSCHRIFT

(11) **EP 3 969 351 B1**
(45) Veröffentlichungstag und Bekanntmachung des Hinweises auf die Patenterteilung: **27.08.2025**
(21) Anmeldenummer: 20735076.0
(22) Anmeldetag: 15.06.2020
(51) Int. Cl.: B61L 27/40, B61L 27/50, G01S 7/40, G01S 13/60, B61L 25/02, B61L 15/00

(54) **ODOMETRISCHES VERFAHREN, INSBESONDERE FÜR EIN SCHIENENFAHRZEUG ODER EINE LEITZENTRALE**
ODOMETRIC METHOD, IN PARTICULAR FOR A RAIL VEHICLE OR A CONTROL CENTER
PROCÉDÉ ODOMÉTRIQUE, EN PARTICULIER POUR UN VÉHICULE FERROVIAIRE OU UN CENTRE DE COMMANDE

(30) Priorität: 18.06.2019 DE 102019208865
(43) Veröffentlichungstag der Anmeldung: 23.03.2022
(73) Patentinhaber: Siemens Mobility GmbH, 81739 München (DE)
(72) Erfinder: CALDER, Steven Alexander, Charlotte, North Carolina 28202 (US)
(74) Vertreter: Siemens Patent Attorneys
(86) Internationale Anmeldenummer: PCT/EP2020/066442
(87) Internationale Veröffentlichungsnummer: WO 2020/254229

(56) Entgegenhaltungen:
- WO-A1-2019/086097
- DE-A1- 102012 215 533
- PETER HINTZE ET AL: ""Im Plan steht aber ein anderer Kilometer!" - Das Potenzial georeferenzierter Bahninfrastrukturdaten - "But that's not the kilometre in the plan!" - the potential of georeferenced railway infrastructure data", SIGNAL UND DRAHT: SIGNALLING & DATACOMMUNICATION, vol. 110, no. 11, 1 November 2018 (2018-11-01), DE, pages 6 - 15, XP055522312, ISSN: 0037-4997

## Beschreibung

Die Erfindung betrifft ein Verfahren zur odometrischen Überwachung (Odometrie) eines Schienenfahrzeugs.

Weiterhin betrifft die Erfindung ein Schienenfahrzeug und eine Leitzentrale, das/die ausgerüstet ist, dieses Verfahren auszuführen.

Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Die Odometrie im Sinne dieser Erfindung ist eine wesentliche Funktionalität automatischer Zugbeeinflussungsssysteme, zum Beispiel dem sog. European Train Control System (ETCS). Die Spezifikationen der automatischen Zugbeeinflussungssysteme (Auch Zugsicherungssysteme genannt) nutzen die Odometrie als Prozess für die Messung der Bewegung eines Zuges entlang eines Gleises, der zur Geschwindigkeits- und Wegmessung verwendet wird. Die Odometrie ist beispielsweise Teil einer ETCS-Fahrzeug-Referenzarchitektur. Die Weg-, Geschwindigkeits- und Beschleunigungsmessung muss auf einem hohen Sicherheitsniveau, beispielsweise der Sicherheitsanforderungsstufe SIL-4, entsprechen und wird für zahlreiche Funktionen des automatischen Zugbeeinflussungssystems, darunter die Überwachung konstanter Höchstgeschwindigkeiten und Bremskurvenberechnung, Position Reports, Wegroll- und Stillstandsüberwachung sowie zur Gleisfreimeldung verwendet.

Bei der Odometrie werden somit Messwerte verarbeitet, um daraus Ortsinformationen und/oder Geschwindigkeitsinformationen zu gewinnen. Bei Geschwindigkeitsinformationen handelt es sich in erster Linie um die Geschwindigkeit von Schienenfahrzeugen im Streckennetz. Bei Ortsinformationen handelt es sich vorrangig um die aktuelle Position der Schienenfahrzeuge im Streckennetz. Sowohl Geschwindigkeitsinformationen als auch Ortsinformationen können in regelmäßigen Abständen mit verfügbaren Informationen abgeglichen werden. Beispielsweise ist die Position eines Zuges während des Halts in einem Bahnhof vergleichsweise genau bekannt. Allerdings sind solche Abgleiche nur zu ausgewählten Zeitpunkten und an ausgewählten Orten möglich. Es gibt somit immer Zeiträume sowie Streckenabschnitte, in denen die Ortsinformationen und Geschwindigkeitsinformationen lediglich mit dem odometrischen Verfahren berechnet werden können. In dieser Zeit können Fehler auftreten, deren Wirkung sich in der Folgezeit immer weiter verstärken, bevor es zu einem erneuten sicheren Abgleich kommen kann.

Die Erkennung von Fehlern bei den Sensormessungen ist daher unerlässlich, um den Sicherheitsstandard von Odometrie- und Lokalisierungssystemen in Schienenfahrzeugen zu gewährleisten. Ein Schienenfahrzeug unterstützt daher den Einsatz mehrerer Sensoren wie Dopplerradar und Radimpulsgeber (kurz Radsensor genannt), um die Geschwindigkeit sowie die zurückgelegte Wegstrecke in Bezug auf eine Referenz abzuschätzen. Aufgrund des Ausfalls der Sensoren kann die Schätzung von der tatsächlichen Geschwindigkeit oder Entfernung abweichen.

Unterschiedliche Bedingungen können zum Ausfall von Sensoren führen. So können beispielsweise Radschlupf und Gleiten dazu führen, so dass Radimpulsgeber bei der Schätzung der korrekten Geschwindigkeit Messfehler erzeugen. Außerdem können Doppler-Radare an Bord falsche Messungen bei Schneefall oder wenn ein anderer Zug in die entgegengesetzte Richtung fährt, melden. Obwohl die Wahrscheinlichkeit solcher Fehler gering ist, müssen Odometriesysteme Maßnahmen zur Sicherung der hohen Standards aufgrund solcher Ausfälle einleiten können.

DE 10 2012 215 533 A1 beschreibt ein Verfahren für das Bereitstellen von Empfängereinheiten in einer Halterung an einer Strecke. Aufgezeichnete Daten im Retainer werden mit gespeicherten Daten von Orientierungspunkten verglichen. Die Landmarken werden erkannt, um eine Position eines Schienenfahrzeugs in Übereinstimmung mit dem Retainer zu bestimmen. Eine der Empfangseinheiten ist auf einer Kameraachse des Schienenfahrzeugs angeordnet. Zu erstellende Orientierungspunkte werden während der Bewegung des Schienenfahrzeugs in dem Retainer gespeichert.

WO 2019 086 097 A1 beschreibt ein Verfahren zum Bestimmen einer Elementeigenschaft von mindestens einem Eisenbahnelement, umfassend die Schritte: Bereitstellen eines Bewegungssensors auf dem mindestens einen Eisenbahnelement; Sammeln von Bewegungsdaten, die von dem Bewegungssensor bereitgestellt werden, wobei die Bewegungsdaten eine Bewegungscharakteristik des Eisenbahnelements darstellen, die sich von der Elementcharakteristik unterscheidet; Bestimmen der Elementeigenschaft auf der Grundlage der Bewegungsdaten.

PETER HINTZE ET AL: "Im Plan steht aber ein anderer Kilometer!" - Das Potenzial georeferenzierter Bahninfrastrukturdaten - "But that's not the kilometre in the plan!" - the potential of georeferenced railway infrastructure data", SIGNAL UND DRAHT: SIGNALLING & DATACOMMUNICATION, Bd. 110, Nr. 11, 1. November 2018 (2018-11-01), Seiten 6-15, DE ISSN: 0037-4997 beschreibt, wie die große räumliche Ausdehnung und Komplexität von Eisenbahnnetzen hohe Anforderungen an die Prozesse zur Erfassung und Verarbeitung von Infrastrukturdaten stellen. Ein Datenlieferant muss die Anforderungen aller Gewerke der Eisenbahnausrüstungstechnik erfüllen und konsistente Daten effizient erzeugen und bereitstellen. Der vorliegende Beitrag zeigt Herausforderungen bei der Erfassung, Auswertung und Verwaltung dieser Daten auf und stellt Maßnahmen zur Optimierung relevanter Prozesse vor. Der Fokus liegt dabei auf der Auswertung georeferenzierter Daten mittels Geoinformationssystemen (GIS).

Die Aufgabe der Erfindung besteht darin, ein Verfahren zur Odometrie anzugeben, mit dem ein automatisches Zugsicherungssystem möglichst gleichbleibend mit hoher Zuverlässigkeit betrieben werden kann. Außerdem ist es Aufgabe der Erfindung, ein Schienenfahrzeug oder eine Leitzentrale anzugeben, mit der das genannte Verfahren mit einem gleichbleibend hohen Sicherheitsstandard durchführbar ist. Zuletzt ist es Aufgabe der Erfindung, ein Computerprogrammprodukt bzw. eine Bereitstellungsvorrichtung für ein solches Computerprogrammprodukt anzugeben, mit der bzw. mit dem das Verfahren mit einem gleichbleibend hohen Sicherheitsstandard durchführbar ist.

Diese Aufgabe wird durch das Verfahren bzw. die Vorrichtungen, welche durch die Merkmale der unabhängigen Ansprüche definiert sind, gelöst.

Gemäß der Erfindung ist vorgesehen, Muster für unauffällige (d. h. nicht mit Anomalien oder Fehlern behaftete) Messergebnisse beispielsweise in einer Datenbank abzuspeichern. Die aktuell gemessenen Messergebnisse können dann mit den Mustern verglichen werden. Hierdurch ist es möglich, Anomalien schnell zu erkennen und daraus geeignete Maßnahmen abzuleiten. Diese können darin bestehen, den Zugbetrieb einzuschränken oder auszusetzen oder eine Korrektur der Messwerte vorzunehmen, wenn es sich um Messfehler handelt. Wenn Messfehler häufiger auftreten, können beispielsweise fehlerhaft arbeitende Komponenten des automatischen Zugbeeinflussungssystems ausgewechselt werden.

Eine verbesserte Erkennung von odometrischen Fehlern (Anomalien) kann erfindungsgemäßen dazu beitragen, die Sicherheitsmargen zu verringern. Das Schrumpfen der Sicherheitsfehlergrenzen kann zu einem genaueren Odometrie- und Lokalisierungsverfahren führen. Dies wird erfindungsgemäß dadurch erreicht, dass in Zeiträumen, in denen eine zuverlässige Abgleich mit anderen dem automatischen Zugbeeinflussungssystem vorliegenden Daten nicht möglich ist, sondern die Ortsinformationen und/oder die Geschwindigkeitsinformationen ausschließlich aus den Messwerten des Odometrie Verfahrens hergeleitet werden müssen, das erfindungsgemäße Verfahren angewendet wird.

Erfindungsgemäß erfolgt während dieser Zeiträume somit ein Abgleich mit den zur Verfügung stehenden Mustern, um dem Auftreten von Fehlern möglichst schnell entgegenwirken zu können. Die Maßnahmen, die durch das Feststellen einer Abweichung von den Mustern eingeleitet werden sollen, können abhängig von der Stärke des Abweichens von den Mustern, von dem Zeitraum, in dem das automatische Zugbeeinflussungssystem keine genaueren Daten zur Verfügung hat, und von dem aktuellen Betriebszuständen (Verkehrsaufkommen, Geschwindigkeit des Schienenfahrzeuge) abhängig gemacht werden.

Der Vorteil bei dem erfindungsgemäßen Verfahren liegt darin, dass auch bei längeren Zeiträumen, in denen odometrische Messungen ohne Abgleich mit abgesicherten Daten durchgeführt werden, ein Abgleich mit den Mustern möglich ist, was einen hohen Sicherheitsstandard (beispielsweise SIL-4) sicherstellt. Dieser kann somit vorteilhaft bei geringem Aufwand an Komponenten erreicht werden, da keine zusätzlichen Sensoren in den zu überwachenden Fahrzeugen oder in der Leitzentrale erforderlich sind. Daher lässt sich der erwähnte Zugewinn an Sicherheit vorteilhaft auch wirtschaftlich erreichen.

Die erfindungsgemäßen verfahrenstechnischen Maßnahmen werden vorzugsweise rechnergestützt umgesetzt. Dies bedeutet, dass das automatische Zugbeeinflussungssystem durch Computer gesteuert wird, deren Algorithmen zur Durchführung des erfindungsgemäßen Verfahrens geeignet sind und programmiert wurden. Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere ist der Ausdruck "Computer" breit auszulegen, um alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein, die vorzugsweise auch zu einem Netzwerk zusammengeschlossen sein können.

Unter "rechnergestützt" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung des genannten erfindungsgemäßen Verfahrens ausgerüstet ist.

Unter einer "Speichereinheit" kann im Zusammenhang mit der Erfindung beispielsweise ein computerlesbarer Speicher in Form eines Arbeitsspeichers (engl. Random-Access Memory, RAM) oder einer Festplatte verstanden werden.

Gemäß einer Ausgestaltung der Erfindung ist vorgesehen, dass das Auswerten durch maschinelles Lernen erfolgt. Vorteilhaft wird das automatische Zugbeeinflussungssystem auf diese Weise mit einer künstlichen Intelligenz ausgestattet, die es erlaubt, automatisch einen Vergleich der Messwerte und/oder der Ortsinformation und/oder der Geschwindigkeitsinformationen mit Mustern vorzunehmen. Überdies kann vorteilhaft durch die Ausstattung des automatischen Zugerfassungssystems mit einer künstlichen Intelligenz die Erstellung von Mustern erfolgen bzw. bereits erstellte Muster können optimiert oder bei geänderten Rahmenbedingungen angepasst werden. Ein solches mit einer künstlichen Intelligenz ausgestattetes Zugbeeinflussungssystem wird dann auch als selbst lernend bezeichnet, wie im Folgenden näher erläutert wird.

Die Ausstattung des Zugsbeeinflussungssystems mit einer künstlichen Intelligenz hat den großen Vorteil, dass das System auf Änderungen reagieren kann und eine selbstständige Optimierung vornehmen kann. Diese Herangehensweise ist immer dann von besonderem Vorteil, wenn nicht genügend Daten vorliegen, um eine zuverlässige Steuerung/Regelung vorzunehmen, wie dies beispielsweise der Fall ist, wenn das odometrische Verfahren über einen längeren Zeitraum ohne Referenzwerte auskommen muss.

Unter künstlicher Intelligenz (im Folgenden auch mit KI abgekürzt) ist im Rahmen dieser Erfindung im engeren Sinne das rechnergestützte Machine Learning (im Folgenden auch mit ML abgekürzt). Es geht dabei um das statistische Lernen der Parametrisierung von Algorithmen, vorzugsweise für sehr komplexe Anwendungsfälle. Mittels Machine Learning erkennt das System anhand von zuvor eingegebenen Lerndaten Muster und Gesetzmäßigkeiten bei den erfassten Prozessdaten. Mithilfe geeigneter Algorithmen können durch ML eigen ständig Lösungen zu aufkommenden Problemstellungen gefunden werden. ML gliedert sich in drei Felder - überwachtes Lernen, unüberwachtes Lernen und bestärkendes Lernen (Reinforcement Learning), mit den spezifischeren (Teil-)Anwendungen Regression und Klassifikation, Strukturerkennung und -vorhersage, Datengenerierung (Sampling) sowie autonomes Handeln.

Beim überwachten Lernen wird das System durch den Zusammenhang von Eingabe und zugehöriger Ausgabe bekannter Daten trainiert. Dabei kommt es auf die Verfügbarkeit richtiger Daten an, denn wenn das System mit schlechten Beispielen trainiert wird, so lernt es fehlerhafte Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch ist und wo Abweichungen auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Das maschinelle Lernen kann beispielsweise durch künstliche neuronale Netze (im Folgenden kurz ANN für artificial neural network genannt) durchgeführt werden. Gemäß einer Ausgestaltung der Erfindung ist vorgesehen, dass das das maschinelle Lernen mit einem künstlichen neuronalen Netz durchgeführt wird. Vorteilhaft stellen künstliche neuronale Netze eine Umgebung zur Verfügung, die das maschinelle Lernen optimal unterstützt. Dabei kann der zu beherrschende Prozess auch bei Vorliegen weniger Informationen durch das ANN bearbeitet werden, wobei die zur Verfügung stehenden Muster zum Abgleich der odometrischen Daten (vorstehend auch bezeichnet als Messwerte und/oder Ortsinformationen und/oder Geschwindigkeitsinformation) durch fortschreitenden Betrieb optimiert und auf verschiedene Situationen (unterschiedliche Orte, verschiedene äußere Bedingungen wie Wettergeschehen, alterungsbedingte Änderungen) angepasst werden können, ohne dass man diese Situation ausführlich erfassen und beschreiben muss.

Künstliche neuronale Netze basieren meist auf der Vernetzung vieler Neuronen, beispielsweise McCulloch-Pitts-Neuronen oder leichter Abwandlungen davon. Grundsätzlich können auch andere künstliche Neuronen Anwendung in ANN finden, z. B. das High-Order-Neuron. Die Topologie eines Netzes (die Zuordnung von Verbindungen zu Knoten) muss abhängig von seiner Aufgabe bestimmt werden. Nach der Konstruktion eines Netzes folgt die Trainingsphase, in der das Netz "lernt". Dabei kann ein Netz beispielsweise durch folgende Methoden lernen:
- Entwicklung neuer Verbindungen
- Löschen existierender Verbindungen
- Ändern der Gewichtung (der von Neuron j zu Neuron i)
- Anpassen der Schwellenwerte der Neuronen, sofern diese Schwellwerte besitzen
- Hinzufügen oder Löschen von Neuronen
- Modifikation von Aktivierungs-, Propagierungs- oder Ausgabefunktion

Außerdem verändert sich das Lernverhalten bei Veränderung der Aktivierungsfunktion der Neuronen oder der Lernrate des Netzes. Praktisch gesehen lernt ein ANN hauptsächlich durch Modifikation der Gewichte der Neuronen. Eine Anpassung des Schwellwertes kann hierbei durch ein on-Neuron miterledigt werden. Dadurch sind ANN in der Lage, komplizierte nichtlineare Funktionen über einen Lernalgorithmus, der durch iterative oder rekursive Vorgehensweise aus vorhandenen Ein- und gewünschten Ausgangswerten alle Parameter der Funktion zu bestimmen versucht, zu erlernen. ANN sind dabei eine Realisierung des konnektionistischen Paradigmas, da die Funktion aus vielen einfachen gleichartigen Teilen besteht. Erst in ihrer Summe wird das Verhalten komplex.

Gemäß einer Ausgestaltung der Erfindung ist vorgesehen, dass das künstliche neuronale Netz ein LSTM-Netz ist, wobei das Netzwerk kontinuierlich oder in regelmäßigen Zeitabständen (quasi kontinuierlich) mit den Messwerten und/oder den Ortsinformationen und/oder den Geschwindigkeitsinformationen gespeist wird.

LSTM steht für Long short-term memory oder zu Deutsch "Langes Kurzzeitgedächtnis". Es wird vorgeschlagen, LSTM-Netze zu verwenden, um eine Anomalien oder Fehler in einer Messung bei dem odometrischen Verfahren zu identifizieren. Diese Anomalien können identifiziert werden, da sie außerhalb des Bereichs liegen, der bestimmt wird durch die Prognose der LSTM-Netze unter Nutzung bereits verfügbarer Messwerte (von denen es mit der Zeit immer mehr gibt, so dass die Zuverlässigkeit der Ergebnisse des LSTM-Netzes immer zuverlässiger werden). Um die LSTM-Netze zu trainieren, werden historische odometrische Daten von verschiedenen Sensoren verwendet. Die verwendeten Netze können dann eine Prognose der nächsten Messung, die durchgeführt werden soll, erstellen. Die tatsächlichen Messungen der odometrischen Sensoren werden dann mit den prognostizierten odometrischen Daten der LSTM-Netze verglichen. Wenn eine Messung/Berechnung odometrischer Daten außerhalb des prognostizierten Bereichs liegt, werden diese als anomal angesehen. Daraus werden dann weitere Maßnahmen abgeleitet.

Gemäß einer Ausgestaltung der Erfindung ist vorgesehen, dass die Muster jeweils zulässige Wertebereiche für die Messwerte und/oder die Ortsinformationen und/oder die Geschwindigkeitsinformationen enthalten.

Hierdurch ist im laufenden Betrieb vorteilhaft eine einfache und schnelle Kontrolle der odometrischen Daten einer aktuellen Massemessung/Berechnung möglich, sodass sofort auf Anomalien bzw. Fehler reagiert werden kann. Andererseits werden die aktuellen Messungen gleichzeitig herangezogen, um die ermittelten Referenzwerte gegebenenfalls in geeigneter Weise anzupassen.

Gemäß einer Ausgestaltung der Erfindung ist vorgesehen, dass bei der Erzeugung der Muster als Ortsinformation der Ort der Entstehung der Messwerte mit dem Muster verknüpft wird.

Mit dieser Ausgestaltung der Erfindung kann vorteilhaft erreicht werden, dass geänderte odometrische Daten lokal bestimmten Abschnitten eines Streckennetzes zugeordnet werden können. Dies ist insbesondere für Variationen vorteilhaft, die aufgrund unterschiedlicher örtlicher Bedingungen im Streckennetz entstehen. Es wird mit anderen Worten eine ortsabhängige Abspeicherung von Mustern für den Vergleich der odometrischen Daten möglich. Das macht die Vorhersagen vorteilhaft genauer und die Muster können mit einem engeren Toleranzbereich ausgestattet werden.

Gemäß einer Ausgestaltung der Erfindung ist vorgesehen, dass bei der Erzeugung des Musters eine Zusatzinformation bezüglich des Schienenfahrzeugs, in dem die Messwerte entstanden sind, und/oder bezüglich des verwendeten Messverfahrens und/oder des verwendeten Sensortyps mit dem Muster verknüpft werden.

Mit dieser Ausgestaltung der Erfindung kann vorteilhaft erreicht werden, dass die Muster für odometrische Daten abhängig von verschiedenen Bezugssystemen und den in diesen zum Einsatz kommenden Sensoren erfasst werden können. Auch hier können individuelle Unterschiede auftreten, die bei Vorliegen von Informationen, welcher Zug im Streckennetz unterwegs ist, für das automatische Zugbeeinflussungssystem die Auswahl der geeigneten Muster ermöglichen. Auch hierdurch können individuellere Muster verwendet werden, so dass vorteilhaft Muster mit einem engeren Toleranzbereich verwendet werden können.

Gemäß einer Ausgestaltung der Erfindung ist vorgesehen, dass dieses mit einem Rechner in einem Schienenfahrzeug durchgeführt wird.

Diese Variante unterstützt vorteilhaft insbesondere die Aufnahme Zug-individueller Muster (wie vorstehend beschrieben), die selbstverständlich nach ihrer Erzeugung auch an eine Leitzentrale weitergegeben werden und dort zentral gespeichert werden können. Außerdem können vorteilhaft Probleme bei der Übertragung der Daten vermieden werden, wenn diese bereits im Zug ausgewertet werden (beispielsweise in Tunneln). Die künstliche Intelligenz des maschinellen Lernens ist bei dieser Variante vorteilhaft auf mehrere Stellen, nämlich die Schienenfahrzeuge verteilt.

Gemäß einer Ausgestaltung der Erfindung ist vorgesehen, dass dieses mit einem Rechner in einer Leitzentrale für den Schienenverkehr durchgeführt wird.

Diese Variante unterstützt vorteilhaft die Erstellung einer zentralen Datenbank. Außerdem ist diese Lösung vorteilhaft sehr kostengünstig, da ein zentraler Rechner mit einer künstlichen Intelligenz einer geeigneten Kapazität für die Berechnung gleichzeitig mehrerer Muster ausgestattet werden kann. Ein zentraler Rechner der Leitzentrale kann dann hinsichtlich seiner Kapazität in den meisten Zeiten vollständig ausgelastet werden, weswegen die Rechenkapazität optimiert werden kann. Eine dezentrale Lösung, bei der die Berechnung in den einzelnen Fahrzeugen (Zügen) erfolgt, weist zwangsläufig eine höhere Redundanz auf, weswegen auf der anderen Seite aber eine größere Verfügbarkeit und kürzere Zeitdauer bis zum Vorliegen von Ergebnissen die Folge ist.

Die genannte Aufgabe wird alternativ mit dem eingangs angegebenen Anspruchsgegenstand (Schienenfahrzeug) erfindungsgemäß auch dadurch gelöst, dass dieses ausgerüstet ist, ein Verfahren nach Anspruch 8 auszuführen.

Die hiermit verbundenen Vorteile sind obenstehend in Bezug auf das beanspruchte odometrische Verfahren bereits ausführlich erläutert worden und gelten in gleicher Weise auch für das Schienenfahrzeug. Insbesondere können die in den Unteransprüchen dargestellten Ausgestaltungen des Verfahrens auch in dem Schienenfahrzeug verwirklicht werden.

Die genannte Aufgabe wird alternativ mit dem eingangs angegebenen Anspruchsgegenstand (Leitzentrale) erfindungsgemäß auch dadurch gelöst, dass diese ausgerüstet ist, ein Verfahren nach Anspruch 9 durchzuführen.

Die hiermit verbundenen Vorteile sind obenstehend in Bezug auf das beanspruchte odometrische Verfahren bereits ausführlich erläutert worden und gelten in gleicher Weise auch für die Leitzentrale. Insbesondere können die in den Unteransprüchen dargestellten Ausgestaltungen des Verfahrens auch in dem Schienenfahrzeug verwirklicht werden.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- Fig.1: Ein Ausführungsbeispiel des erfindungsgemäßen Schienenfahrzeugs, welches dazu eingerichtet ist, ein Ausführungsbeispiel des erfindungsgemäßen odometrischen Verfahrens auszuführen (schematisch),
- Fig. 2: ein Ausführungsbeispiel der erfindungsgemäßen Leitzentrale, die dazu ausgelegt ist, ein Ausführungsbeispiel des erfindungsgemäßen odometrischen Verfahrens durchzuführen (schematisch), und
- Fig. 3: ein Ausführungsbeispiel des erfindungsgemäßen odometrischen Verfahrens, dargestellt als Flussdiagramm.

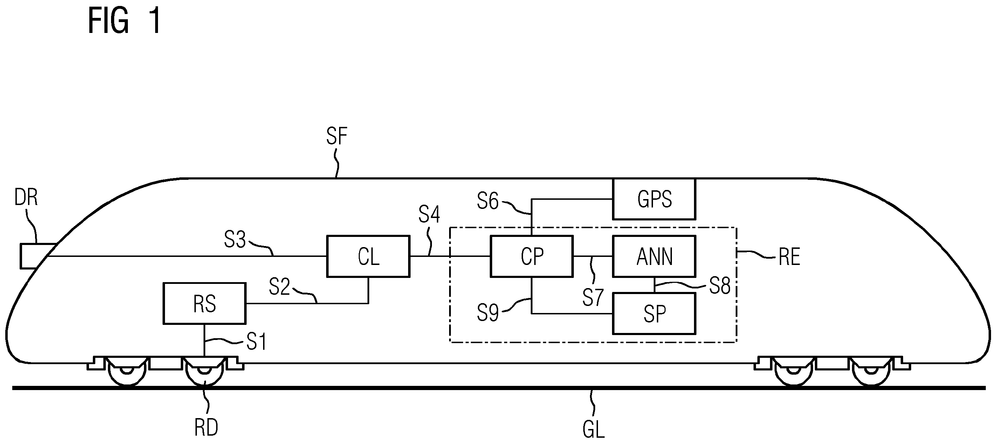

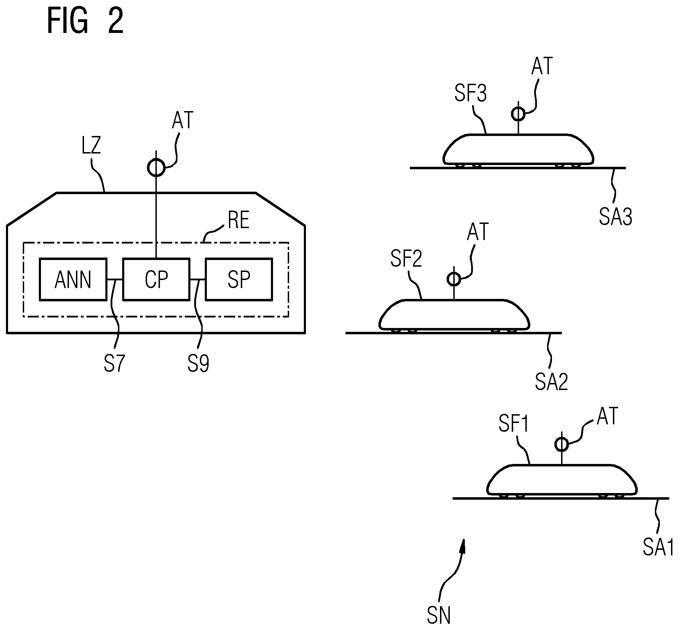

In Figur 1 ist ein Schienenfahrzeug SF dargestellt, welches auf einem Gleis GL steht. Das Gleis GL ist Teil eines nicht näher dargestellten Streckennetzes SN (vgl. Figur 2), welches von dem Schienenfahrzeug SF befahren werden kann. Das Schienenfahrzeug gemäß Figur 1 ist eine Lokomotive.

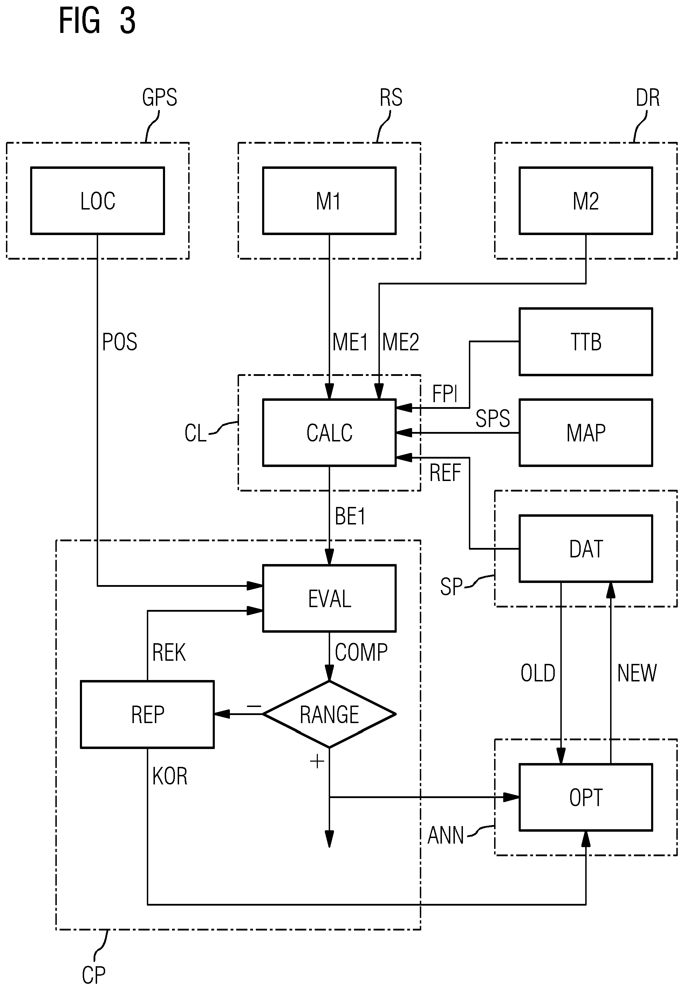

In dem Schienenfahrzeug SF ist eine Einrichtung zur Durchführung eines odometrischen Verfahrens als Blockschaltbild dargestellt. Dieses System weist einen Radsensor RS auf, welcher die Umdrehung eines Rades RD des Schienenfahrzeugs SF zählt und insofern eine Aussage über die Geschwindigkeit und über die Ortsänderung des Schienenfahrzeugs SF anhand von Messwerten eines Messergebnisses (ME1, vgl. Fig.3) beschreiben kann. Außerdem weist das Schienenfahrzeug SF ein Radar, insbesondere ein Dopplerradar DR auf, mit dem sowohl die Entfernung des Schienenfahrzeugs SF zu Objekten als auch unter Ausnutzung des Dopplereffektes in an sich bekannter Weise die Geschwindigkeit des Schienenfahrzeugs SF ermittelt werden kann. Insofern können die tatsächliche Geschwindigkeit und der tatsächliche Ort des Schienenfahrzeugs SF parallel mit mehreren Sensoren ermittelt werden, um ggf. Aussagen über Messfehler treffen zu können.

Zur Aufnahme der Radumdrehung des Rades RD durch den Radsensor RS ist eine erste Schnittstelle S1 vorgesehen. Der Radsensor RS ist über eine zweite Schnittstelle S2 mit einem Controller CL verbunden. Das Dopplerradar DR ist über eine dritte Schnittstelle S3 mit dem Controller CL verbunden. Der Controller CL ist insofern für eine erste Auswertung der Messsignale und einem evtl. Abgleich derselben zuständig. Der Controller CL ist dazu eingerichtet, aus den Messwerten des Dopplerradars DR und des Radsensors RS Ortsinformationen und Geschwindigkeitsinformationen bezüglich des Schienenfahrzeugs SF zu berechnen.

Der Controller CL ist über eine vierte Schnittstelle S4 mit einem Computer oder Rechner CP verbunden. Dieser Rechner empfängt über eine sechste Schnittstelle S6 ein Signal eines Ortungssensors GPS. Der Ortungssensor kann beispielsweise den GPS-Standard nutzen oder auch ein anderes Funktionsprinzip, um die Position des Schienenfahrzeugs SF unabhängig von den odometrischen Messungen zu bestimmen. Hierdurch kann ein Referenzwert erzeugt werden oder zumindest ein Vergleichswert, der über die sechste Schnittstelle S6 an den Rechner CP gegeben wird. Dieser Vergleichswert kann zumindest dann herangezogen werden, wenn durch Anwendung des odometrischen Verfahrens ein Fehler oder eine Anomalie festgestellt wird (hierzu im Folgenden mehr).

Der Rechner CP weist weiterhin eine siebte Schnittstelle S7 zu einem künstlichen neuronalen Netz ANN auf, dessen Architektur gemäß Figur 1 nicht näher dargestellt ist. Das künstliche neuronale Netz ANN ist dazu geeignet, ein maschinelles Lernen dahingehend umzusetzen, dass die Messwerte des Dopplerradars DR und des Radsensors RS sowie die aus den Messdaten ermittelten Orts- und Geschwindigkeitsinformationen einer Plausibilitätsprüfung unterworfen werden können. Anomalien und (wahrscheinliche) Fehler werden dadurch aufgedeckt, dass die betrachteten odometrischen Daten nicht in einem für diese in der entsprechenden Situation festgelegten Erwartungsfenster (Messfenster, Wertefenster) liegen. Dabei vergleicht das künstliche neuronale Netz ANN die aktuellen odometrischen Daten mit einer in einer Speichereinheit SP abgelegten historischen Daten, wobei zu diesem Zweck eine achte Schnittstelle S8 genutzt wird. Die Speichereinheit SP ist über eine neunte Schnittstelle S9 auch mit dem Rechner CP verbunden, sodass über diese weiteren Informationen, wie z. B. der über den Ortssensor GPS ermittelte Wert, für die Ortsinformation an die Speichereinheit SP weitergegeben werden können.

Die Variante in Figur 1 zeigt ein Beispiel, in dem die Infrastruktur für die Anwendung des erfindungsgemäßen odometrischen Verfahrens in dem Schienenfahrzeug SF zur Anwendung kommt. Das ANN muss in diesem Fall in dem Schienenfahrzeug SF vorgesehen werden und wird vorrangig zur Verarbeitung der in dem Schienenfahrzeug SF erzeugten Daten verwendet. Hierbei bilden der Rechner CP, das künstliche neuronale Netz ANN und die Speichereinheit SP eine Recheneinheit RE. Dies ist jedoch nur beispielhaft zu verstehen. In dem Ausführungsbeispiel gemäß Figur 1 wird die Auswertung der Messwerte durch den Controller CL durchgeführt und die Bearbeitung durch das künstliche neuronale Netz ANN durch den Rechner CP gesteuert. Die Verarbeitung der Messwerte aus dem Radsensor RS und dem Dopplerradar DR könnte direkt durch den Rechner CP vorgenommen werden oder der Controller CL könnte Teil der Recheneinheit RE sein. Darüber hinaus sind auch andere Konfigurationen denkbar, die in Abhängigkeit der Erfordernisse des Einzelfalls für verschiedene Schienenfahrzeuge SF gefunden werden können.

Gemäß Figur 2 ist eine Lösung dargestellt, bei der die Recheneinheit RE (vgl. Figur 1) in einer Leitzentrale LZ untergebracht ist, wobei die Leitzentrale LZ Teil eines automatischen Zugbeeinflussungssystems, insbesondere ETCS, ist.

Die Leitzentrale LZ ist mit einer Antenne AT ausgestattet. Ebenso sind ein Schienenfahrzeug SF1 auf einem Streckenabschnitt SA1 eines Streckennetzes SN und ein Schienenfahrzeug SF2 auf einem Streckenabschnitt SA2 und ein Schienenfahrzeug SF3 auf einem Streckenabschnitt SA3 mit Antennen AT ausgerüstet, sodass diese Schienenfahrzeuge mit der Leitzentrale LZ via Funk (nicht näher dargestellt) kommunizieren können. In den Schienenfahrzeugen SF1, SF2, SF3 sind in nicht näher dargestellter Weise ein Dopplerradar DR, ein Radsensor RD und ein Controller CL entsprechend dem Schienenfahrzeug SF gemäß Figur 1 vorgesehen. Auch ein Ortssensor GPS kann, wie in Figur 1 dargestellt, verbaut sein.

Die Schienenfahrzeuge SF1, SF2, SF3 geben somit die Daten an die Leitzentrale LZ weiter, wo diese von dem künstlichen neuronalen Netz ANN in der in Figur 1 beschriebenen Weise verarbeitet werden. Hierbei wird auch eine Speichereinheit SP genutzt, wobei die Rechenkapazität des künstlichen neuronalen Netzes ANN gemäß Figur 2 dazu ausreicht, die Daten mehrerer Schienenfahrzeuge SF1, SF2, SF3 gleichzeitig auszuwerten.

In Figur 3 kann ein Ausführungsbeispiel des erfindungsgemäßen odometrischen Verfahrens nachvollzogen werden. Einer besseren Übersichtlichkeit wegen sind die Systemgrenzen der einzelnen Funktionselemente gemäß Figur 1 und Figur 2, wie z. B. das Dopplerradar DR, der Radsensor RS, der Controller CL, der Rechner CP und das künstliche neuronale Netz ANN eingetragen. Dadurch wird deutlich, in welchen Einheiten die einzelnen Verfahrensschritte gemäß diesem Ausführungsbeispiel des odometrischen Verfahrens durchgeführt werden können.

Im Radsensor RS findet ein erster Messschritt M1 und dem Dopplerradar DR ein zweiter Messschritt M2 statt. Beide Messschritte M1 und M2 verwirklichen beispielhaft das erfindungsgemäße odometrische Verfahren. Dieses könnte auch durchgeführt werden, indem nur einer der beiden Messschritte M1, M2 durchgeführt wird.

In jedem Fall werden die aus den Messschritten M1, M2 ermittelten Messergebnisse ME1, ME2, bestehend aus Messwerten, an den Controller CL weitergegeben, der einen Berechnungsschritt CALC durchführt. Das Berechnungsergebnis BE1 wird von dem Controller CL an den Rechner CP zwecks Durchführung eines Bewertungsschrittes EVAL weitergegeben.

Bei dem Bewertungsschritt EVAL werden neben dem Bewertungsergebnis BE1 weitere Daten herangezogen. Aus einem Lokalisierungsschritt LOC des Ortungssensors GPS wird ein Positionssignal POS erzeugt und im Bewertungsschritt EVAL berücksichtigt. Außerdem wird bezüglich des Zuges oder des Schienenfahrzeugs SF, von dem die Messschritte M1, M2 durchgeführt wurden, von einem Fahrplan TTB eine Fahrplaninformation FPI berücksichtigt. Zuletzt kann von einem Streckenplan MAP eine Soll-Position SPS ermittelt werden.

Bei dem Bewertungsschritt EVAL werden diese Daten derart miteinander abgeglichen, dass in einem Vergleichsschritt COMP entschieden werden kann, ob die Werte des Berechnungsergebnisses BE1 für das weitere Verfahren verwendet werden können. Wenn dies der Fall ist (+), kann das odometrische Verfahren für diesen Messschritt abgeschlossen werden. Die Daten werden an das künstliche neuronale Netz ANN gesendet, welches diese als "neue Daten" NEW in die Datenbank der Speichereinheit SP einbringt, wo sie als zulässige Referenzdaten abgespeichert werden und zukünftig als "alte Daten" OLD abgerufen werden können.

Zu diesem Zweck wird außerdem ein Datenabgleich DAT durchgeführt, indem die für diese Messung relevanten Daten als Referenzdaten REF aus der Speichereinheit SP durch den Rechner CP ausgelesen werden.

Sollte ein Wertebereich RANGE verlassen werden (-), so ist in dem Verfahren ein Rekursionsschritt REK erforderlich. Diesem gemäß werden einerseits Rekursionsdaten REK für eine Wiederholung des Bewertungsschritts EVAL in dem Rechner CP verwendet, um aus den Ersatzdaten, z. B. der Position POS des Ortungssensors GPS ersatzweise eine Ortsinformation zu ermitteln. Außerdem werden Korrekturdaten KOR an das künstliche neuronale Netz ANN gesendet und führen dort zu einem Optimierungsschritt OPT, der durch ein maschinelles Lernen automatisch durchgeführt wird. Hierbei können die Daten aus dem Rekursionsschritt REK und dem zweiten Bewertungsschritt EVAL Einfluss nehmen, da diese dazu führen, dass bei einem zweiten Bewerten der Vergleichsdaten COMP der Wertebereich RANGE eingehalten wird (+) . Das künstliche neuronale Netz ANN entscheidet bei Durchlaufen des Optimierungsschritts OPT selbstständig, ob neue Daten NEW in die Speichereinheit SP geschrieben werden, und ob aus der Speichereinheit SP zu dem Optimierungsschritt OPT abgerufene alte Daten OLD gelöscht werden, um den Verfahrensablauf weiter zu optimieren.

### Bezugszeichenliste

- SF, SF1, ...: Schienenfahrzeug
- GL: Gleis
- SN: Streckennetz
- RS: Radsensor
- RD: Rad
- DR: Dopplerradar
- S1, S2, ...: Schnittstelle
- CL: Controller
- CP: Computer / Rechner
- GPS: Ortssensor
- ANN: künstliches neuronales Netz
- SP: Speichereinheit
- RE: Recheneinheit
- LZ: Leitzentrale
- AT: Antenne
- SA1, SA2, ...: Streckenabschnitt
- M1, M2: Messschritt
- ME1, ME2: Messergebnis
- CALC: Berechnungsschritt
- BE1: Berechnungsergebnis
- EVAL: Bewertungsschritt
- LOC: Lokalisierungsschritt
- POS: Positionssignal
- TTB: Fahrplan
- FPI: Fahrplaninformation
- MAP: Streckenplan
- SPS: Soll-Position
- COMP: Vergleichsschritt
- NEW: neue Daten
- DAT: Datenabgleich
- RANGE: Wertebereich
- REP: Rekursionsschritt
- REK: Rekursionsdaten
- KOR: Korrekturdaten
- OPT: Optimierungsschritt
- OLD: alte Daten

## Patentansprüche

1. Verfahren zur odometrischen Überwachung eines Schienenfahrzeugs (SF), bei dem
• mit einem Sensor im Schienenfahrzeug (SF) Messwerte aufgenommen werden,
• aus den Messwerten Ortsinformationen und/oder Geschwindigkeitsinformationen berechnet werden,
wobei
• die Messwerte und/oder Ortsinformationen und/oder Geschwindigkeitsinformationen gespeichert werden,
• Muster für die Messwerte und/oder die Ortsinformationen und/oder die Geschwindigkeitsinformationen durch Auswerten bereits erfasster Messwerte und/oder der Ortsinformationen und/oder der Geschwindigkeitsinformationen erzeugt werden,
• wenn die Ortsinformationen und/oder die Geschwindigkeitsinformationen ausschließlich aus den Messwerten des Verfahrens zur odometrischen Überwachung hergeleitet werden, aktuell erfasste Messwerte und/oder Ortsinformationen und/oder Geschwindigkeitsinformationen mit mindestens einem Muster abgeglichen werden,
• das Auftreten von Abweichungen der aktuell erfassten Messwerte von den Mustern über eine Schnittstelle ausgegeben wird.

2. Verfahren nach Anspruch 1,
wobei das Auswerten durch maschinelles Lernen erfolgt.

3. Verfahren nach Anspruch 2,
wobei das das maschinelle Lernen mit einem künstlichen neuronalen Netz (ANN) durchgeführt wird.

4. Verfahren nach Anspruch 3,
wobei das künstliche neuronale Netz (ANN) ein LSTM-Netz ist, wobei das LSTM-Netz kontinuierlich oder in regelmäßigen Zeitabständen mit den Messwerten und/oder den Ortsinformationen und/oder den Geschwindigkeitsinformationen gespeist wird.

5. Verfahren nach einem der voranstehenden Ansprüche,
wobei die Muster jeweils zulässige Wertebereiche (RANGE) für die Messwerte und/oder die Ortsinformationen und/oder die Geschwindigkeitsinformationen enthalten.

6. Verfahren nach einem der voranstehenden Ansprüche,
wobei bei der Erzeugung der Muster als Ortsinformation der Ort der Entstehung der Messwerte mit dem Muster verknüpft wird.

7. Verfahren nach einem der voranstehenden Ansprüche,
wobei bei der Erzeugung des Musters eine Zusatzinformation bezüglich des Schienenfahrzeugs (SF), in dem die Messwerte entstanden sind, und/oder bezüglich des verwendeten Messverfahrens und/oder des verwendeten Sensortyps mit dem Muster verknüpft werden.

8. Verfahren nach einem der voranstehenden Ansprüche,
wobei dieses mit einem Rechner (CP) in einem Schienenfahrzeug (SF) durchgeführt wird.

9. Verfahren nach einem der voranstehenden Ansprüche,
wobei dieses mit einem Rechner in einer Leitzentrale (LZ) für den Schienenverkehr (SF) durchgeführt wird.

10. Schienenfahrzeug (SF) , das mit einem Radsensor (RS) und einem Computer (CP), der eingerichtet ist, ein Verfahren nach Anspruch 8 auszuführen, ausgerüstet ist.

11. Leitzentrale, (LZ) die mit einem Computer (CP), der eingerichtet ist, ein Verfahren nach Anspruch 9 durchzuführen, ausgerüstet ist.

12. Computerprogrammprodukt mit Programmbefehlen zur Durchführung des Verfahrens nach einem der Ansprüche 1 bis 9.

13. Bereitstellungsvorrichtung für das Computerprogrammprodukt nach Anspruch 12, wobei die Bereitstellungsvorrichtung das Computerprogrammprodukt speichert und/oder bereitstellt.

## Claims

1. Method for odometric monitoring of a rail vehicle (SF) in which
• measured values are recorded with a sensor in the rail vehicle (SF),
• location information and/or speed information is calculated from the measured values,
wherein
• the measured values and/or the location information and/or speed information are stored,
• patterns for the measured values and/or the location information and/or speed information are created by evaluation of measured values and/or the location information and/or the speed information already acquired,
• if the location information and/or the speed information is derived exclusively from the measured values of the method for odometric monitoring, then measured values and/or location information and/or speed information currently acquired are synchronized with at least one pattern,
• the occurrence of deviations of the currently acquired measured values from the patterns is output via an interface.

2. Method according to claim 1,
wherein
the evaluation takes place by machine learning.

3. Method according to claim 2,
wherein
the machine learning is carried out with an artificial neural network (ANN).

4. Method according to claim 3,
wherein
the artificial neural network (ANN) is an LSTM network, wherein the LSTM network is supplied continuously or at regular intervals with the measured values and/or the location information and/or the speed information.

5. Method according to one of the preceding claims,
wherein
the patterns each contain permitted ranges of values (RANGE) for the measured values and/or the location information and/or the speed information.

6. Method according to one of the preceding claims,
wherein
in the creation of the patterns, the location in which the measured values arise is linked to the pattern as location information.

7. Method according to one of the preceding claims,
wherein,
in the creation of the pattern, additional information relating to the rail vehicle (SF) in which the measured values arose and/or relating to the measurement method used and/or to the sensor type used is linked to the pattern.

8. Method according to one of the preceding claims,
wherein
said method is carried out with a computer (CP) in a rail vehicle (SF).

9. Method according to one of the preceding claims,
wherein
said method is carried out with a computer (CP) in a control centre (LZ) for rail traffic (SF).

10. Rail vehicle (SF),
which is equipped with a wheel sensor (RS) and a computer (CP), which is configured to carry out a method according to claim 8.

11. Control centre (LZ),
which is equipped with a computer (CP), which is configured to carry out a method according to claim 9.

12. Computer program product with program instructions for carrying out the method according to one of claims 1 to 9.

13. Provision apparatus for the computer program product according to claim 12, wherein the provision apparatus stores and/or provides the computer program product.

## Revendications

1. Procédé de contrôle odométrique d'un véhicule (SF) ferroviaire, dans lequel
• on enregistre des valeurs de mesure par un capteur du véhicule (SF) ferroviaire,
• on calcule des informations de lieu et/ou des informations de vitesse à partir des valeurs de mesure,
dans lequel
• on met en mémoire les informations de mesure et/ou les informations de lieu et/ou les informations de vitesse,
• on produit des modèles pour les valeurs de mesure et/ou les informations de lieu et/ou les informations de vitesse en évaluant des valeurs de mesure et/ou des valeurs de lieu et/ou des informations de vitesse déjà détectées,
• si les informations de lieu et/ou les informations de vitesse proviennent exclusivement des valeurs de mesure du procédé de contrôle odométrique, on ajuste des valeurs de mesure et/ou des informations de lieu et/ou des informations de vitesse relevées en cours à au moins un modèle,
• on émet par l'intermédiaire d'une interface l'apparition d'écarts des valeurs de mesure relevées en cours aux modèles.

2. Procédé suivant la revendication 1,
dans lequel
l'évaluation s'effectue par apprentissage automatique.

3. Procédé suivant la revendication 2,
dans lequel
on effectue l'apprentissage automatique par un réseau neuronal artificiel (ANN).

4. Procédé suivant la revendication 3,
dans lequel
le réseau (ANN) neuronal artificiel est un réseau LSTM, dans lequel le réseau LSTM est alimenté en continu ou à intervalle de temps régulier en les valeurs de mesure et/ou les informations de lieu et/ou les informations de vitesse.

5. Procédé suivant l'une des revendications précédentes,
dans lequel
les modèles contiennent respectivement des plages (RANGE) de valeur admissibles pour les valeurs de mesure et/ou les informations de lieu et/ou les informations de vitesse.

6. Procédé suivant l'une des revendications précédentes,
dans lequel,
lors de la production des modèles, on combine au modèle comme information de lieu, le lieu de la création des valeurs de mesure.

7. Procédé suivant l'une des revendications précédentes,
dans lequel,
lors de la production du modèle, on combine au modèle une information supplémentaire concernant le véhicule (SF) ferroviaire, dans lequel les valeurs de mesure sont créées, et/ou concernant le procédé de mesure utilisé et/ou le type de capteur utilisé.

8. Procédé suivant l'une des revendications précédentes,
dans lequel
on effectue celui-ci avec un ordinateur (CP) dans un véhicule (SF) ferroviaire.

9. Procédé suivant l'une des revendications précédentes,
dans lequel
on effectue celui-ci avec un ordinateur dans une centrale (LZ) de conduite du trafic (SF) ferroviaire.

10. Véhicule (SF) ferroviaire, qui est équipé d'un capteur (RS) de roue et d'un ordinateur (CP), qui est agencé pour exécuter un procédé suivant la revendication 8.

11. Centrale (LZ) de conduite, qui est équipée d'un ordinateur (CP), qui est agencé pour exécuter un procédé suivant la revendication 9.

12. Produit de programme d'ordinateur ayant des instructions de programme pour exécuter le programme suivant l'une des revendications 1 à 9.

13. Dispositif de mise à disposition du produit de programme d'ordinateur suivant la revendication 12, dans lequel le dispositif de mise à disposition met en mémoire et/ou met à disposition le produit de programme d'ordinateur.
